# EUROPÄISCHE PATENTSCHRIFT

(11) **EP 2 170 640 B1**
(45) Veröffentlichungstag und Bekanntmachung des Hinweises auf die Patenterteilung: **27.02.2013**
(21) Anmeldenummer: 08801468.3
(22) Anmeldetag: 18.06.2008
(51) Int. Cl.: B60J 3/02

(54) **SONNENBLENDE**
SUN SHIELD
PARE-SOLEIL

(30) Priorität: 28.06.2007 DE 102007030112; 21.11.2007 DE 102007056181
(43) Veröffentlichungstag der Anmeldung: 07.04.2010
(73) Patentinhaber: Johnson Controls Interiors GmbH & Co. KG, 47929 Grefrath (DE)
(72) Erfinder: FROTZ, Thomas, 51399 Burscheid (DE)
(74) Vertreter: Wolff, Felix
(86) Internationale Anmeldenummer: PCT/EP2008/004896
(87) Internationale Veröffentlichungsnummer: WO 2009/000451

(56) Entgegenhaltungen:
- EP-A- 1 164 037
- WO-A-89/08823
- DE-C1- 19 633 192
- US-A- 3 853 370
- US-A- 5 873 621

## Beschreibung

Die Erfindung betrifft eine Sonnenblende für ein Fahrzeug, die von einer Staustellung um eine horizontale Drehachse vor die Windschutzscheibe zumindest in eine erste Verschattungsstellung verschwenkbar ist. Die Sonnenblende weist einen Sonnenblendenkörper auf, an dem ein Blendensegment verschieblich gelagert ist.

Die gattungsgemäßen Sonnenblenden sind aus dem Stand der Technik, beispielsweide der WO089/08823, der DE 33 41 509 A1, der DE 697 17 088 T2, der DE 203 20 593 U1, der DE 197 16 084 A1 sowie der DE 196 33 192 C1 bekannt. Die dort offenbarten haben jedoch den Nachteil, dass sie vergleichsweise aufwendig gestaltet sind, so dass die Lagerung der Sonnenblende an dem Fahrzeug insbesondere beim verschieben des Blendensegments vergleichsweise hoch belastet wird und/oder dasisie zu Geräuschbildung neigen.

Es war deshalb die Aufgabe der vorliegenden Erfindung eine Sonnenblende zur Verfügung zu stellen welche die die Nachteile des Standes der Technik nicht aufweist.

Gelöst wird die Aufgabe mit einer Sonnenblende für ein Fahrzeug nach Anspruch 1

Die erfindungsgemäße Sonnenblende ist von einer Staustellung um eine horizontale Drehachse vor die Windschutzscheibe zumindest in eine erste Verschattungsstellung verschwenkbar. Vorzugsweise ist sie jedoch auch in eine zweite Verschattungsstellung im wesentlichen parallel zum Seitenfenster überführbar. Es ist vorgesehen, dass die Sonnenblende vorzugsweise entlang ihrer Längserstreckung so geteilt ausgebildet ist, dass ein Segment der Sonnenblende in einer Richtung, vorzugsweise quer zur Längserstreckung, reversibel verlagerbar ist. Beispielsweise kann die Querausdehnung der Sonnenblende hierdurch in der Staustellung kleiner eingestellt werden als in erster Verschattungsstellung. Dieser Vorteil kann auch dann genutzt werden, wenn die Sonnenblende aus der ersten Verschattungsstellung um eine Vertikalachse vor das Seitenfenster des Fahrzeugs in eine zweite Verschattungsstellung geschwenkt wird.

Die Teilung entlang ihrer Längserstreckung durchdringt vorzugsweise nur einen Teilbereich, beispielsweise nur die Vorder- oder Hinterschale, der Sonnenblende. Insbesondere ist die Teilung und die Verschiebung des Segmentes so vorgesehen, dass sich nie ein Schlitz zwischen dem Sonnenblendenkörper und dem verschieblichen Segment ergibt, durch den Sonnenstrahlen dringen können.

Ganz besonders bevorzugt überdecken sich der Blendenkörper und das Blendensegment in jeder Stellung zumindest teilweise.

Weiterhin erfindungsgemäß weist die Sonnenblende ein Federmittel auf, mit dem das Blendensegment in seine ausgefahrene Stellung vorgespannt ist und das die Überführung des Blendensegments in seine ausgefahrene Stellung bedarfsweise antreibt. Diese Ausführung hat den Vorteil, dass sich die Sonnenblende niemals selbsttätig verkleinert und somit zu einer unerwarteten Blendung insbesondere des Fahrers des Fahrzeuges führt. Außerdem wird die Lagerung der erfindungsgemäßen Sonnenblende an dem Fahrzeug geringer belastet, weil das Blendensegment nicht aus dem Blendenkörper herausgezogen werden muss, sondern sich herausdrückt.

Vorzugweise wird die Überführung der Sonnenblende in die ausgefahrene Stellung gebremst, besonders bevorzugt durch eine Rotationsbremse.

Vorzugsweise weist die Sonnenblende eine Führung auf, entlang derer das Blendensegment ein- und ausgefahren wird.

Erfindungsgemäβ wirkt das Federmittel mit einem Gelenkarm zusammen und treibt diesen an. Besonders bevorzugt handelt es sich bei dem Gelenkarm um einen Rotationshebel.

In einer weiteren bevorzugten Ausführungsform ist der Gelenkarm mit dem Blendensegment, insbesondere mit dessen Führung, verbunden.

Vorzugsweise sind das Federmittel, der Gelenkarm und/oder die Führung doppelt ausgeführt. Diese bevorzugte Ausführungsform der vorliegenden Erfindung verbessert insbesondere die Bewegung des Blendensegmentes. Besonders bevorzugt ist bei dieser Ausführungsform die Bewegung der beiden Gelenkarme synchronisiert. Bei einer Ausführung der Gelenkarme als Drehgelenkarme kann dies beispielsweise durch komplementäre Formschlussmittel erfolgen, die an beiden Gelenkarmen angeordnet sind und miteinander in Eingriff stehen, beispielsweise kämmen. Die Synchronisation der beiden Gelenkarme verhindert ein Verkanten des Blendensegmentes beim Ein - und/oder Ausfahren.

Gemäß einem bevorzugten Gegenstand der vorliegenden Erfindung ist das Blendensegment in seiner eingefahrenen und/oder ausgefahrenen Stellung mittels einer Rastmechanik, vorzugsweise einer Druckrastmechanik, arretierbar. Das Verrasten des verlagerbaren Teils in Ein- und/oder Ausfahrstellung erfolgt mit Vorteil durch eine druckbetätigte Rastung, ähnliche einer Druckrastmechaniik für die Mine eines Druckkugelschreibers, wobei der Druck insbesondere auf die Unterkante des abgetrennten Blendensegments erfolgt. Das Verrasten in beiden Stellungen erhöht die Sicherheit des Fahrzeuges und/oder vermindert Geräuschentwicklungen.

Vorzugsweise erfolgt das Ausfahren durch einen kurzen Druckimpuls, der die Rastung deaktiviert. Ein Antriebsmittel, beispielsweise eine Feder drückt dann das Blendensegment in seine ausgefahrene Stellung. Das Einfahren hingegen erfolgt durch einen längeren Druckimpuls, bei dem die Arbeit zur Überführung des Blendensegmentes in die eingefahrene Stellung geleistet wird. Besonders bevorzugt wird bei dieser Arbeit auch eine Feder gespannt.

Im Folgenden wird die Erfindung anhand der Figuren 1- 4 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1a**: zeigt die erfindungsgemäße Sonnenblende mit dem Blendensegment in eingefahrener Stellung.
- **Figur 1b**: zeigt die Sonnenblende gemäß Figur 1a in Seitenansicht.
- **Figur 2a**: zeigt die erfindungsgemäße Sonnenblende mit dem Blendensegment in ausgefahrener Stellung.
- **Figur 2b**: zeigt die Sonnenblende gemäß Figur 2a in Seitenansicht.
- **Figur 3**: zeigt die Bewegungsmechanik des Blendensegmentes in eingefahrener Stellung.
- **Figur 4**: zeigt die Bewegungsmechanik des Blendensegmentes in ausgefahrener Stellung.

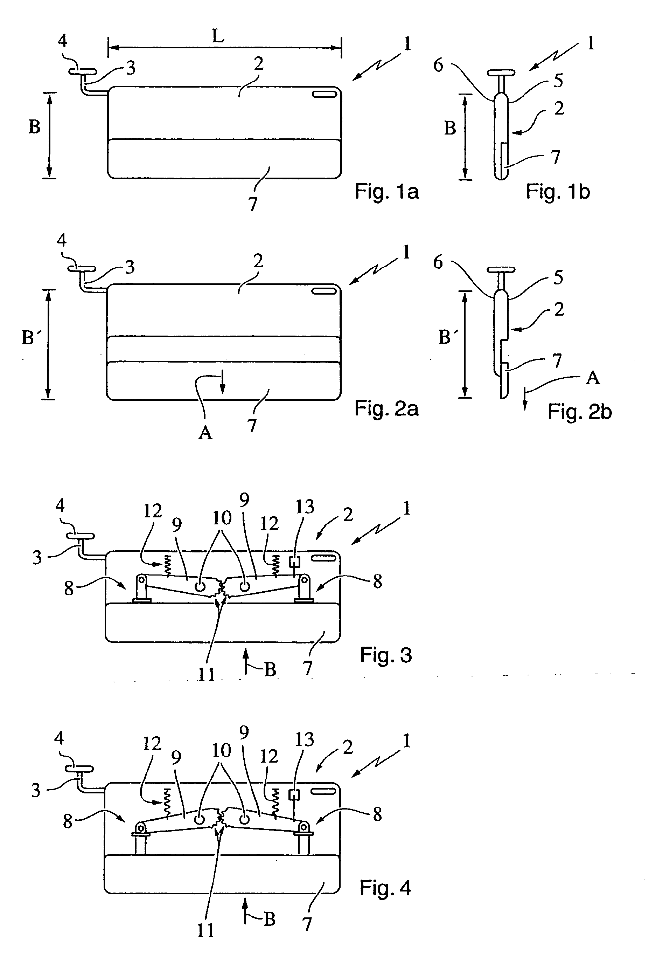

Figur 1 zeigt die erfindungsgemäße Sonnenblende 1 in ihrer ersten Verschattungsstellung in Ansicht in Fahrtrichtung (Figur 1 a) und quer dazu (Figur 1 b). Die Sonnenblende 1 besteht aus einem Sonnenblendenkörper 2 mit einer Längsersteckung L und einer Querausdehnung B sowie aus einer winkelförmigen Sonnenblendenachse 3 mit Lagerbäckchen 4. Der Sonnenblendenkörper 2 weist eine vordere Hälfte, die Vorderschale 5 und eine hintere Hälfte, die Hinterschale 6 auf, die beispielsweise durch Spritzgießen gesondert gefertigt werden können. Die Vorderschale 5 ist entlang der Längserstreckung des Sonnenblendenkörpers 2 geteilt ausgebildet, so dass im Bereich der Unterkante des Sonnenblendenkörpers 2 ein schmales Blendensegment 7 ausgebildet wird. Dieses Blendensegment 7 ist zur Vergrößerung des Verschattungsbereichs, wie durch den Pfeil A dargestellt, von der Sonnenblendenachse 3 weg bis zu einer Querausdehnung B' verlagerbar. Diese ausgefahrene Stellung des Blendensegmentes 7 ist in den Figuren 2a und 2b, die ebenfalls die Verschattungsstellung zeigen, dargestellt.

Das Blendensegment 7 ist, wie aus Figur 3 ersichtlich, über Führungen 8 quer zur Längserstreckung L verschieblich gelagert. Im Sonnenblendenkörper 2 sind spiegelbildlich zueinander zwei Gelenkarme 9 angeordnet, die nahe des Zentrums des Sonnenblendenkörpers 2 um zwei zueinander beabstandete Drehachsen 10 schwenkbar und über miteinander kämmende Verzahnungen 11 synchronisiert sind. Die Enden der Gelenkarme 9 sind mit den Führungen 8 drehbar verbunden und über Federn 12 in Richtung der ausgefahrenen Stellung vorgespannt. Einer der Gelenkarme 9 ist ferner mit einer Druckrastmechanik 13 verbunden, welche den Gelenkarm 9 zunächst in der eingefahrenen Stellung (Figur 3) hält. Bei einem Druck auf die Unterkante des Blendensegments 7 (Pfeil B) gegen die Druckrichtung der Federn 12 wird das Blendensegment 7 jedoch von den Federn 12 und den Gelenkarmen 9 in die ausgefahrene Stellung (Fig. 4) verlagert und dort vorzugsweise ebenfalls, insbesondere von der Druckrastmechanik 13, arretiert. Die Überführungsgeschwindigkeit des Blendensegmentes 7 von der eingefahrenen in die ausgefahrene Stellung wird vorzugsweise durch eine Bremse, insbesondere eine Rotationsbremse, zumindest zeitweise reduziert. Bei einem emeuten Druck in Richtung des Pfeils B wird das Blendensegment 7 wieder in den Sonnenblendenkörper 2 eingeschoben und durch die Druckrastmechanik 13 gehalten. Dabei werden die Federn 12 wieder vorgespannt. Eine derartige Druckrastmechanik 13 ist beispielsweise aus der Druckschrift DE 1 291 258 A bekannt. Diese Druckschrift wird hiermit als Referenz eingeführt und gilt somit als Teil der Offenbarung.

### Bezugszeichenliste

- 1: Sonnenblende
- 2: Sonnenblendenkörper
- 3: Sonnenblendenachse
- 4: Lagerböckchen
- 5: Vorderschale
- 6: Hinterschale
- 7: Blendensegment
- 8: Führung
- 9: Gelenkarm
- 10: Drehachse
- 11: Verzahnung
- 12: Feder
- 13: Druckrastmechanik

## Patentansprüche

1. Sonnenblende (1) für ein Fahrzeug mit einem Sonnenblendenkörper (2), an dem ein Blendensegment (7) verschieblich gelagert ist, das von einer eingefahren in eine ausgefahrene Stellung reversibel überführbar ist, wobei sie ein Federmittel (12) aufweist, das das Blendensegment (7) in seine ausgefahrene Stellung vorspannt, **dadurch gekennzeichnet, dass** das Federmittel (12) mit einem Gelenkarm (9) zusammenwirkt und dieren antreibt.

2. Sonnenblende nach Anspruch 1, **dadurch gekennzeichnet, dass** die Überführung in die ausgefahrene Stellung gebremst ist.

3. Sonnenblende nach Anspruch 1 oder 2, **dadurch gekennzeichnet, dass** das Blendensegment (7) eine Führung (8) aufweist.

4. Sonnenblende nach einem der voranstehenden Ansprüche, **dadurch gekennzeichnet, dass** der Gelenkarm (9) mit dem Blendensegment (7) verbunden ist.

5. Sonnenblende nach einem der Ansprüche 1 - 4, **dadurch gekennzeichnet, dass** das Federmittel, der Gelenkarm (9) und/oder die Führung (8) doppelt ausgeführt sind.

6. Sonnenblende nach Anspruch 5, **dadurch gekennzeichnet, dass** Gelenkarme (9) synchronisiert sind.

7. Sonnenblende nach einem der voranstehenden Ansprüche, **dadurch gekennzeichnet, dass** das Blendensegment (7) in seiner ein- und/oder ausgefahrenen Stellung mittels einer Rastmechanik, vorzugsweise einer Druckrastmechanik (13) arretierbar ist.

## Claims

1. Sun shield (1) for a vehicle, with a sun shield body (2) on which a shield segment (7) is mounted in a displaceable manner, said shield segment being reversibly transferrable from a retracted position into an extended position, wherein the sun shield has a spring means (12) which prestresses the shield segment (7) into the extended position thereof, **characterized in that** the spring means (12) interacts with an articulated arm (9) and drives the latter.

2. Sun shield according to Claim 1, **characterized in that** the transfer into the extended position is braked.

3. Sun shield according to Claim 1 or 2, **characterized in that** the shield segment (7) has a guide (8).

4. Sun shield according to one of the preceding claims, **characterized in that** the articulated arm (9) is connected to the shield segment (7).

5. Sun shield according to one of Claims 1-4, **characterized in that** the spring means, the articulated arm (9) and/or the guide (8) are formed in duplicate.

6. Sun shield according to Claim 5, **characterized in that** articulated arms (9) are synchronized.

7. Sun shield according to one of the preceding claims, **characterized in that** the shield segment (7) can be locked in the retracted and/or extended position thereof by means of a latching mechanism, preferably a pressure-actuated latching mechanism (13).

## Revendications

1. Pare-soleil (1) pour un véhicule comprenant un corps de pare-soleil (2) sur lequel un segment de bandeau (7) est monté de manière déplaçable, lequel segment de bandeau peut être transféré de manière réversible d'une position rentrée dans une position sortie, le pare-soleil présentant un moyen de ressort (12) qui précontraint le segment de bandeau (7) dans sa position sortie, **caractérisé en ce que** le moyen de ressort (12) coopère avec un bras articulé (9) et entraîne ce dernier.

2. Pare-soleil selon la revendication 1, **caractérisé en ce que** le transfert dans la position sortie est freiné.

3. Pare-soleil selon la revendication 1 ou 2, **caractérisé en ce que** le segment de bandeau (7) présente un guidage (8).

4. Pare-soleil selon l'une quelconque des revendications précédentes, **caractérisé en ce que** le bras articulé (9) est connecté au segment de bandeau (7).

5. Pare-soleil selon l'une quelconque des revendications 1 à 4, **caractérisé en ce que** le moyen de ressort, le bras articulé (9) et/ou le guidage (8) sont réalisés sous forme double.

6. Pare-soleil selon la revendication 5, **caractérisé en ce que** les bras articulés (9) sont synchronisés.

7. Pare-soleil selon l'une quelconque des revendications précédentes, **caractérisé en ce que** le segment de bandeau (7) peut être bloqué dans sa position rentrée et/ou sortie au moyen d'un mécanisme d'encliquetage, de préférence d'un mécanisme d'encliquetage par pression (13).
